# EUROPEAN PATENT SPECIFICATION

(11) **EP 0 504 978 B1**
(45) Date of publication and mention of the grant of the patent: **15.02.1995**
(21) Application number: 92200688.7
(22) Date of filing: 11.03.1992
(51) Int. Cl.: B65G 47/26

(54) **Unit for the accumulation of articles transported along a horizontal path, in particular cardboard boxes**
Sammeleinheit für längs eines horizontalen Weges transportierte Gegenstände, insbesondere Kartons
Unité d'accumulation pour articles transportés le long d'un chemin horizontal, notamment des cartons

(30) Priority: 19.03.1991 IT MI910783
(43) Date of publication of application: 23.09.1992
(73) Proprietor: Marchetti, Augusto, I-20146 Milano (IT)
(72) Inventor: Marchetti, Augusto, I-20146 Milano (IT)
(74) Representative: Mittler, Enrico

(56) References cited:
- EP-A- 0 320 823
- DE-A- 2 806 640
- GB-A- 2 018 213
- US-A- 3 420 355
- US-A- 4 238 029
- US-A- 4 832 184

## Description

The present invention relates to a unit for the accumulation of articles transported along a horizontal path, in particular cardboard boxes.

Accumulation units are known, for example from the US Patent No. 3,420,355, wherein a propelling belt operated in a continuous manner is normally kept in friction engagement with a succession of idle rollers on which the transported articles are placed and is disengaged from them for the corresponding stoppage of the transported articles when a roller or other detection member inserted in the transportation path detects the presence of an article for a period of time that is longer than that normally required for its passage over it on the part of the article itself, essentially as the result of the intervention of a device for the accumulation of articles located downstream at a pre-set position.

Such known units are for the most part quite complicated and do not allow the ease and flexibility of use that, on the other hand, might be desirable.

Further accumulation units are known from US-A-4 238 029 and EP-A-0 320 823, which substantially correspond to the preamble of claim 1.

The object of the present invention is to provide a unit for the accumulation of articles transported along a horizontal path, in particular cardboard boxes, that is constructively and functionally simple, reliable and flexible.

According to the invention such object is attained with an accumulation unit as defined in claim 1.

Thanks to the use of elastic belt transmissions as opposed to the thrust means, the accumulation unit according to the invention is very simple and functional, especially as regards the engagement and disengagement of the rubber-coated rollers with respect to the idle rollers. In the normal operating engagement, in fact, it is the thrust means, essentially simple small pneumatic cylinders operated by suitable valves, that impose the raising of the frames supporting the rotating shafts thus simultaneously putting under the proper tension the belts for the transmission of motion. At the moment of disengagement following the intervention of the detection means, but especially at rest with the machine switched off, the elastic reaction of the transmission belts co-operates on the other hand with the weight of the individual frames in order to ensure the descent of the frames themselves to the position of disengagement of the corresponding rubber-coated rollers. No additional complicated operating means are required and, when not in use, the transmission belts are in a less stressful position which determines a longer life of the belts themselves.

According to a preferred embodiment of the present invention it is also provided for that the accumulation unit is made in a modular form, that is, as a succession of modular groups of idle rollers, each provided with a respective motorisation unit built in the abovementioned manner. This allows production to be planned, while, at the same time, giving the possibility of constructing accumulation units of any length whatsoever and, if desired, of inserting groups of this type in already existing transporters.

These and other features of the present invention shall be made more evident by a practical embodiment illustrated as a non-limiting example in the enclosed drawings, wherein:
Fig. 1 is a longitudinal side view of an accumulation unit according to the invention;

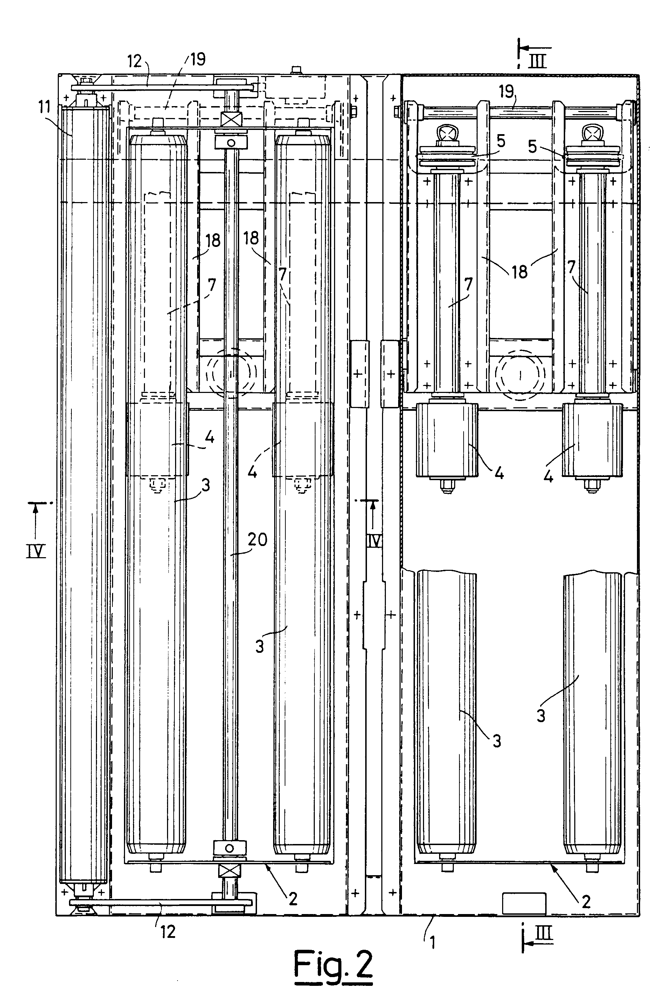

Fig. 2 is a partially-sectioned plan view of a modular part of the abovementioned unit;
Fig. 3 is a transversal cross-sectional view of the accumulation unit taken along the line III-III of Fig.s 1 and 2;
Fig. 4 is a cross-sectional view of the abovementioned modular part taken along the line IV-IV of Fig. 2, with the detection means in the at rest position and the rubber-coated motorisation rollers in the position of engagement with the idle rollers supporting the transported articles;
Fig. 5 is a cross-sectional view similar to that of Fig. 4, with the detection means in the operating position and the rubber-coated motorisation rollers in the position of disengagement from the idle rollers supporting the transported articles;
Fig. 6 is an overall schematic view that illustrates the pneumatic system of the abovementioned accumulation unit.

There is shown by way of examples in the drawings a unit for the accumulation of cardboard boxes 8, which comprises a fixed frame 1 with an essentially longitudinal extension, along which there is arranged a succession of modular groups 2 of idle transevrsal rollers 3 destined for the support of the boxes.

Each group 2 is formed more accurately by two idle side-by-side rollers 3, which can be motorised by friction engagement with respective underlying rubber-coated rollers 4 arranged on respective shafts 7 made to rotate in a continuous manner, through transmission belts 5, by a driving shaft 6 operated by a motor unit 60 (Fig.s 1 and 3).

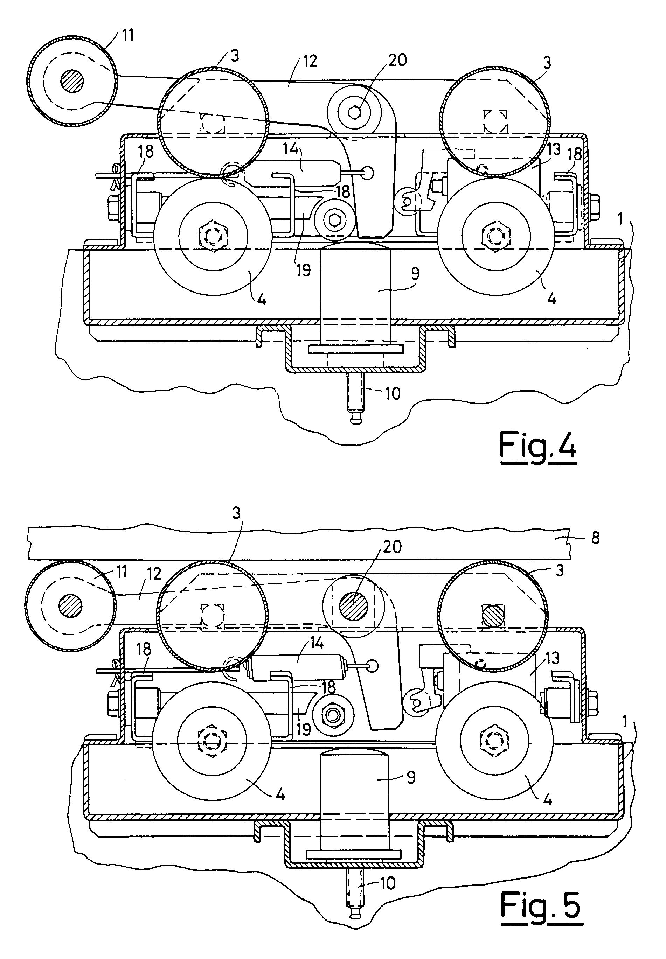

As can be seen from Fig.s 2 to 5, the two rotating shafts 7 of each group 2 are rotatably held by a supporting frame 18, of the lever type, which at one of its ends is hinged at 19 to the fixed frame 1 so that it can be moved from the raised position of Fig. 4, which ensures the friction engagement of the rubber-coated rollers 4 with the idle rollers 3 above for the consequent motorisation of the latter and the lowered position of Fig. 5, which determines the disengagement of the rubber-coated rollers 4 from the abovementioned rollers 3 for the consequent demotorisation of the same.

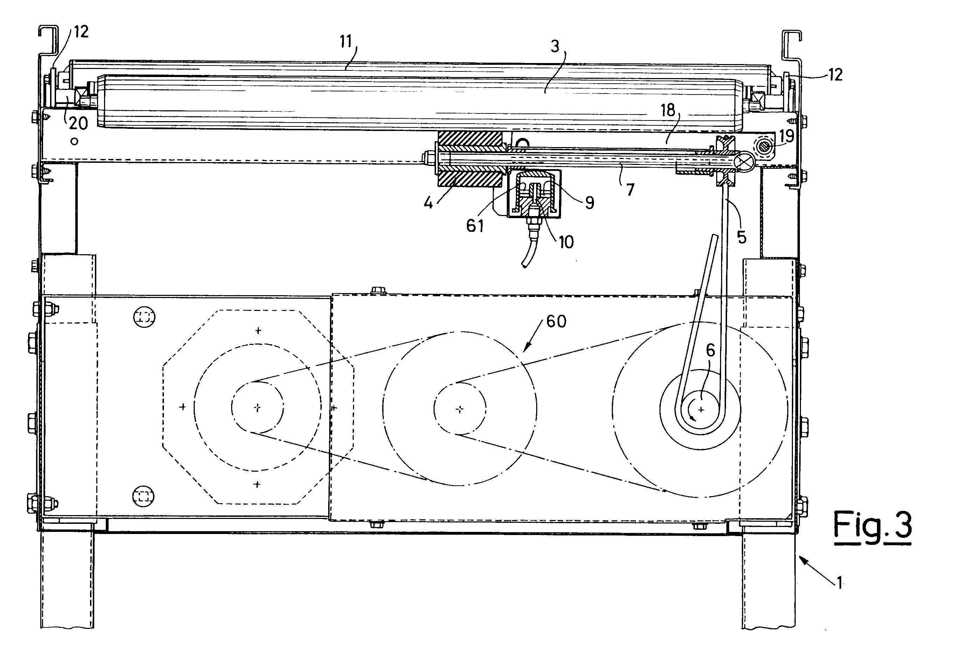

Each supporting frame 18 is urged to the lowered or at rest position of Fig. 5 by its own weight and by the members (rollers 4, shafts 7) supported by it, as well as by the elastic reaction of the transmission belt 5 (stretched between a fixed shaft 6 and a mobile shaft 7), while it is displaced to and kept in the raised or operating position of Fig. 4 by a small pneumatic thrust cylinder 9 which travels on a piston 61 under the action of air introduced through an axial hole 10 of the cylinder 61 (Fig. 3).

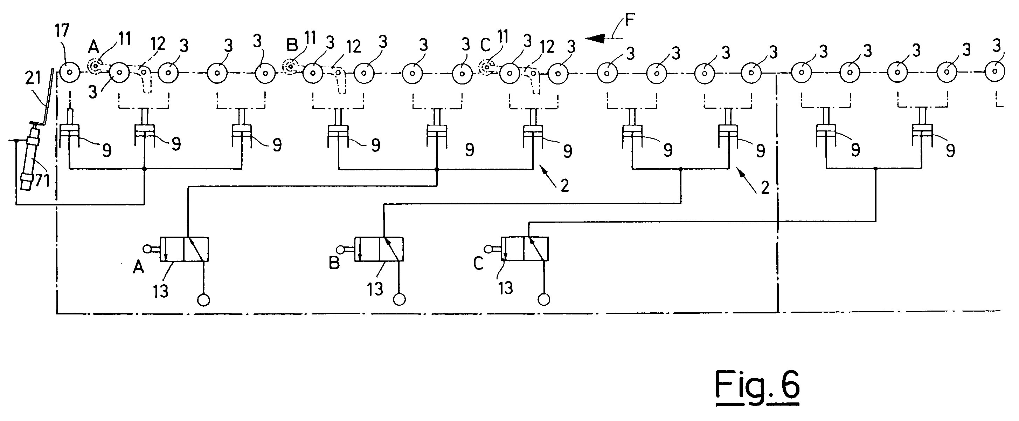

The various small pneumatic cylinders 9 are operated by some pneumatic valves 13, illustrated in Fig. 6, which are normally kept in the position wherein air is introduced into the small cylinders 9 and which can be displaced mechanically to a position of discharge by the intervention of respective pairs of operating levers 12 inserted and hinged at 20 in selected groups 2 of rollers 3 (Fig.s 1 to 5) and connected together by respective detection rollers 11 located between the idle rollers 3 and urged by springs 14 to protrude above them and to disengage the respective valves 13 in the absence of a superimposed box (Fig. 4), while, on the other hand, they are made to return to their normal position between the rollers 3 to engage the abovementioned valves 13 when a box 8 arrives on the roller itself (Fig. 5).

As shown in Fig. 6, the detection rollers 11 arranged in the positions indicated with the letters A, B, C act on respective valves 13 indicated with the letters A, B, C, which, in turn, act on the small cylinders 9 of the different groups of rollers 3 according to the distribution illustrated in Fig. 6, so that each detection roller 11 operates through the respective valve 13 the disactivation, and then the activation, of the small cylinders 9 associated with the groups of rollers 3 upstream from the same detection roller in the direction of the advancement of the boxes indicated by the arrow F in Fig.s 1 and 6.

More precisely, at the passage of a cardboard box 8 the detection roller 11 of a generic group 2, say the one in position B in Fig. 6, is lowered. With reference to Fig.s 4 and 5, the lowering of the detection roller 11 causes the switch-over, through the levers 12, of the valve 13 indicated with the same reference B. In turn, such valve 13 causes the switch to the discharge position of the small thrust cylinders 9 of the group 2 located in the position immediately upstream from the group 2 to which the detection roller 11 that has been lowered by the box belongs, and thus the disengagement of the corresponding rubber-coated rollers 4 of the upper idle rollers 3. As soon as the box 8 has released the detection roller 11 in position B substantially before the subsequent group of rollers 3 has had the time to cause the stoppage of the box that follows, the release of the corresponding detection roller 11 determines the inverse switch-over of the previously operated valve 13 and with it the reactivation of the previously activated small cylinders 9. The engagement is thus restored of the rubber-coated rollers 4 with the idle rollers 3.

The operation described above takes place on each occasion a cardboard box 8 reaches and lands over one of the detection rollers 11 located along the accumulation unit.

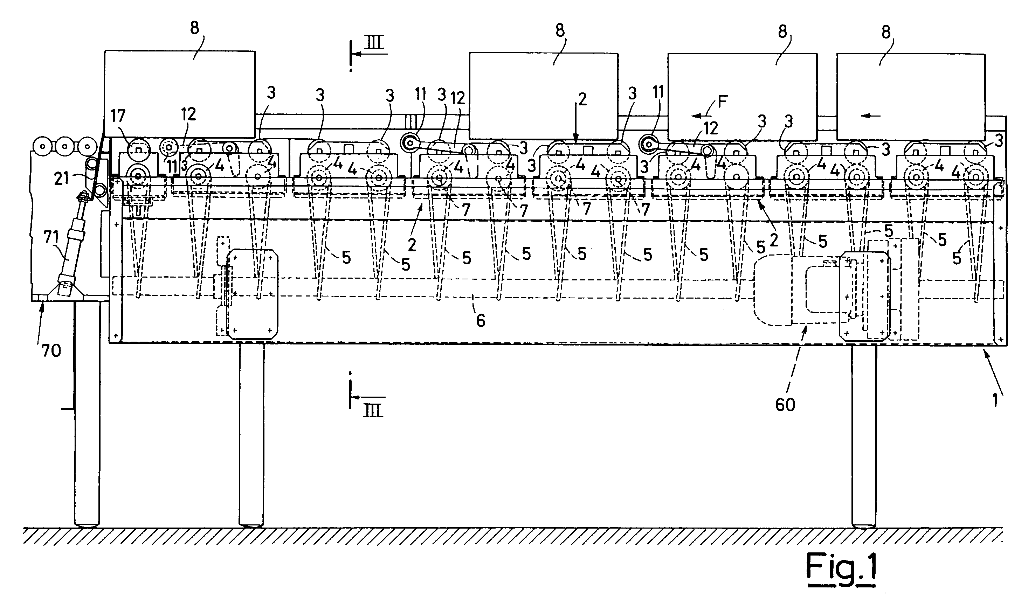

The accumulation unit shown in the drawings, which also has a single idle end roller 17 (Fig. 1) that can be motorised in a manner altogether similar to the previously described idle rollers 3 of the different groups 2, is destined to be arranged at the input to any operating machine which may need a momentary accumulation of boxes upstream from it. A machine of this type is generically indicated with 70 in Fig. 1 and comprises in a manner known in itself a device for the stoppage and frontal holding of the boxes, which in the illustrated example is represented in the form of a sliding rod 21 that can be displaced between a retracted position at rest (Fig. 6) and an extended operating position (Fig. 1) by means of a pneumatic operating cylinder 71, that is operated by the operating machine 70 and that is pneumatically connected to the small pneumatic cylinders 9 of the end roller 17 and to the two immediately subsequent groups of rollers 3 so that its operation in the extended position determines with a slight delay the operation of the small cylinders 9 in the position of demotorisation of the corresponding rollers 17 and 3, and vice versa.

When the stop rod 21 is operated in the extended position, the first arriving box 8 comes to rest up against the rod itself (Fig. 1) and thus keeps in a depressed position the detection roller 11 at position A. The corresponding valve 13 thus causes through the small cylinders 9 the demotorisation of the rollers 3 of subsequent groups 2, the third, fourth and fifth in the case illustrated in Fig.s 1 and 6. Thus the second box also comes to a stop and, supposing that in the meantime it has reached and kept in a depressed position the detection roller 1 in position B (this will possibly take place with the third box in the case of boxes that are particularly short), determines through the corresponding valve 13 and small cylinders 9 the demotorisation of the rollers 3 of further groups 2, the sixth and seventh in the case illustrated in Fig.s 1 and 6. In an altogether similar manner the subsequent boxes, by stopping and keeping in a depressed position the detection roller 11 in position C, determine through the corresponding valve 13 the demotorisation of the rollers 3 of two subsequent groups 2, and so on through further detection rollers 11 and valves 13 for all the possible groups of rollers 3 that follow those represented in the drawings. The boxes thus accumulate on arrival one behind the other with the motorisation system 60, 6, 5, 7, 4 still in operation but disengaged from the rollers 3 that support the boxes. In this situation the transmission belts 5 are under reduced tension so as to limit their wear.

When the cylinder 71 causes the return of the stop rod 21 to the retracted position, the three small cylinders 9 connected to it operate the motorisation of the end roller 17 and of the rollers 3 of the first two groups 2, which thus determine the advancement of the first box outside the accumulation unit and onto the operating machine 70. With the detection roller in position A thus released, the corresponding valve 13 operates the motorisation of the rollers 3 of the subsequent groups 2, which in turn cause the second box to advance which releases the detection roller in position B, and so on until all rollers 3 are motorised and the accumulation unit resumes its transport function.

Naturally that shown in the drawings is but one of the possible embodiments of the present invention, whose construction details may evidently vary at will without going outside the scope and the objects of the invention, as they appear from the following claims.

In particular this holds for the means for the detection of the presence of the boxes, which in the case illustrated in the drawings are constituted by rollers associated with levers operating pneumatic valves but which can also be of a completely different, but equivalent, type such as, say, the photocell type.

The same can be repeated for the means of thrust associated with the rubber-coated rollers 4, which can naturally be made in a manner other than the small pneumatic cylinders 9.

## Claims

1. Accumulation unit comprising a succession of groups (2) of idle rollers (3) supporting the transported articles, motorisation means (4, 7, 5, 6, 60) for said idle rollers (3) normally kept in a position of engagement with said idle rollers (3) and detection means (11) for detecting the presence of articles in a predetermined position to operate the displacement of said motorisation means (4, 7, 5, 6, 60) in a position of disengagement from said idle rollers (3) for the consequent stoppage of said transported articles, said motorisation means (4, 7, 5, 6, 60) being constituted by rubber-coated rollers (4) mounted on respective shafts (7) made to rotate by an underlying motor unit (6, 60) and rotatably held by supporting frames (18) that can be displaced vertically towards and away from said idle rollers (3), there being provided thrust means (9) associated with said supporting frames (18) and operated so as to keep them normally raised for the engagement of said rubber-coated rollers (4) with the respective idle rollers (3) and to allow their descent for the disengagement of said rubber-coated rollers (4) from said idle rollers (3) following the intervention of said detection means (11), characterized in that said shafts (7) are connected to said motor unit (6, 60) through respective elastic belt transmissions (5), which are tensioned by said thrust means (9) during engagement of the rubber-coated rollers (4) with the respective idle rollers (3) so as to cause by elastic reaction the disengagement of said rubber-coated rollers (4) when said thrust means (9) are returned to rest.

2. Accumulation unit according to claim 1, characterized in that said idle rollers (3) are arranged according to a succession of modular groups (2) of idle rollers (3), each provided with a respective motorisation unit formed by at least one rubber-coated motorisation roller (4) mounted on a respective shaft (7) made to rotate by said motor unit (6, 60) through a respective belt transmission (5), by a respective supporting frame (18) that can be displaced vertically and by respective thrust means (9) for movement to a driving position.

3. Accumulation unit according to claim 1, characterised in that said thrust means (9) are constituted by small pneumatic cylinders (9) operated by pneumatic valves (13) operated by said detection means (11).

4. Accumulation unit according to claim 1, characterised in that said supporting frames (18) are of the lever type.

5. Accumulation unit according to claim 1, characterised in that said detection means (11) act on the thrust means (9) associated with the motorisation means (4, 7, 5, 6, 60) of idle rollers (3) arranged upstream of said detection means (11) in the direction of advancement of the transported articles.

## Patentansprüche

1. Sammeleinheit mit einer Folge von Gruppen (2) von Leerlaufrollen (3), die die transportierten Artikel stützen, Motorisierungsmitteln (4, 7, 5, 6, 60) für diese Leerlaufrollen (3), die normalerweise in einer Eingriffsposition mit den Leerlaufrollen (3) gehalten sind, und Erfassungsmitteln (11) zum Erfassen der Anwesenheit von Artikeln in einer vorgegebenen Position, um das Versetzen der Motorisierungsmittel (4, 7, 5, 6, 60) in eine Nichteingriffsstellung bezüglich der Leerlaufrollen (3) zum konsequenten Stoppen der transportierten Artikel zu bewirken, wobei die Motorisierungsmittel (4, 7, 5, 6, 60) von gummibeschichteten Rollen (4) gebildet sind, die auf entsprechenden Achsen (7) befestigt sind, welche durch eine darunterliegende Motoreinheit (6, 60) rotierbar gemacht sind und von Stützrahmen (18) rotierbar gehalten sind, die vertikal zu den Leerlaufrollen (3) hin und von diesen weg versetzt werden können, wobei Schubmittel (9) vorgesehen sind, die den Stützrahmen (18) zugeordnet sind und so betätigt sind, daß sie diese normalerweise zum Eingriff der gummibeschichteten Rollen (4) mit den entsprechenden Leerlaufrollen (3) anheben und ihre Absenkung zum Ausrücken der gummibeschichteten Rollen (4) von den Leerlaufrollen (3) als Folge der Intervention der Erfassungsmittel (11) gestatten,
dadurch **gekennzeichnet**,
daß die Achsen (7) mit der Motoreinheit (6, 60) über entsprechende elastische Riemenübertragungen (5) verbunden sind, welche von den Schubmitteln (9) während des Eingriffs der gummibeschichteten Rollen (4) mit den entsprechenden Leerlaufrollen (3) gespannt sind, um so das Ausrücken der gummibeschichteten Rollen (4) durch elastische Reaktion zu bewirken, wenn die Schubmittel (9) in die Ruhestellung zurückbewegt werden.

2. Sammeleinheit nach Anspruch 1,
dadurch **gekennzeichnet**,
daß, die Leerlaufrollen (3) gemäß einer Folge von modularen Gruppen (2) von Leerlaufrollen (3) angeordnet sind, wobei jede mit einer entsprechenden Motorisierungseinheit versehen ist, die gebildet ist durch zumindest eine gummibeschichtete Motorisierungsrolle (4), welche auf einer entsprechenden Achse (7) angebracht ist, die von der Motoreinheit (6, 60) über eine entsprechende Riemenübertragung (5) in Drehung versetzt wird, durch einen entsprechenden Stützrahmen (18), der vertikal versetzt werden kann, und durch entsprechende Schubmittel (9) zur Bewegung in eine Antriebsposition.

3. Sammeleinheit nach Anspruch 1,
dadurch **gekennzeichnet**,
daß die Schubmittel (9) von kleinen pneumatischen Zylindern (9) gebildet sind, die durch pneumatische Ventile (13) betätigt werden, welche von den Erfassungsmitteln (11) betätigt werden.

4. Sammeleinheit nach Anspruch 1,
dadurch **gekennzeichnet**,
daß die Stützrahmen (18) vom Hebeltyp sind.

5. Sammeleinheit nach Anspruch 1,
dadurch **gekennzeichnet**,
daß die Erfassungsmittel (11) auf die Schubmittel (9) wirken, die der Motorisierungseinheit (4, 7, 5, 6, 60) von Leerlaufrollen (3) zugeordnet sind, welche stromaufwärts der Erfassungsmittel (11) in Vorschubrichtung der transportierten Artikel angeordnet sind.

## Revendications

1. Unité d'accumulation comportant une succession de groupes (2) de rouleaux fous (3) supportant les articles transportés, des moyens de motorisation (4, 7, 5, 6, 60) pour lesdits rouleaux fous (3) maintenus normalement en position d'engagement avec lesdits rouleaux fous (3) et des moyens de détection (11) destinés à détecter la présence d'articles dans une position prédéterminée afin de provoquer le déplacement desdits moyens de motorisation (4, 7, 5, 6, 60) dans une position de désengagement desdits rouleaux fous (3) en vue de l'arrêt consécutif desdits articles transportés, lesdits moyens de motorisation (4, 7, 5, 6, 60) étant constitués par des rouleaux à revêtement en caoutchouc (4) montés sur des arbres respectifs (7) amenés à tourner par une unité motrice sous-jacente (6, 60) et maintenus de façon rotative par des cadres de support (18) qui peuvent être déplacés verticalement vers et à l'écart desdits rouleaux fous (3), des moyens de poussée (9) associés aux dits cadres de support (18) et actionnés de façon à les maintenir normalement relevés pour l'engagement desdits rouleaux à revêtement en caoutchouc (4) avec lesdits rouleaux fous respectifs (3) et de façon à permettre leur descente pour le désengagement desdits rouleaux à revêtement en caoutchouc (4) desdits rouleaux fous (3) à la suite de l'intervention desdits moyens de détection (11) étant prévus, caractérisée en ce que lesdits arbres (7) sont reliés à ladite unité motrice (6, 60) par l'intermédiaire de transmissions à courroie élastique respectives (5), qui sont tendues par lesdits moyens de poussée (9) pendant l'engagement desdits rouleaux à revêtement en caoutchouc (4) avec les rouleaux fous respectifs (3) de façon à provoquer par réaction élastique le désengagement desdits rouleaux à revêtement en caoutchouc (4) lorsque lesdits moyens de poussée (9) sont ramenés au repos.

2. Unité d'accumulation selon la revendication 1, caractérisée en ce que lesdits rouleaux fous (3) sont disposés suivant une succession de groupes modulaires (2) de rouleaux fous (3), pourvus chacun d'une unité de motorisation respective formée par au moins un rouleau de motorisation à revêtement en caoutchouc (4) monté sur un arbre respectif (7) amené à tourner par ladite unité motrice (6, 60) par l'intermédiaire d'une transmission à courroie respective (5), par un cadre de support respectif (18) qui peut être déplacé verticalement et par des moyens de poussée respectifs (9) pour un déplacement vers une position d'entraînement.

3. Unité d'accumulation selon la revendication 1, caractérisée en ce que lesdits moyens de poussée (9) sont constitués par des petits vérins pneumatiques (9) commandés par des soupapes pneumatiques (13) actionnées par lesdits moyens de détection (11).

4. Unité d'accumulation selon la revendication 1, caractérisée en ce que lesdits cadres de support (18) sont du type à levier.

5. Unité d'accumulation selon la revendication 1, caractérisée en ce que lesdits moyens de détection (11) agissent sur les moyens de poussée (9) associés au moyens de motorisation (4, 7, 5, 6, 60) des rouleaux fous (3) disposés en aval desdits moyens de détection (11) dans la direction d'avance des articles transportés.
